(19) Europäisches Patentamt

European Patent Office

Office européen des brevets

(11) **EP 1 564 923 A1**

(12) **EUROPEAN PATENT APPLICATION**

(43) Date of publication:
**17.08.2005 Bulletin 2005/33**

(51) Int Cl.$^7$: **H04L 1/16**

(21) Application number: **05002948.7**

(22) Date of filing: **11.02.2005**

(84) Designated Contracting States:
**AT BE BG CH CY CZ DE DK EE ES FI FR GB GR HU IE IS IT LI LT LU MC NL PL PT RO SE SI SK TR**
Designated Extension States:
**AL BA HR LV MK YU**

(30) Priority: **12.02.2004 KR 2004009401**

(71) Applicant: **Samsung Electronics Co., Ltd.
Suwon-si, Gyeonggi-do (KR)**

(72) Inventors:
- **Han, Jeong-Hoon,
  Samsung Electronics Co., Ltd.
  Suwon-si, Gyeonggi-do (KR)**
- **Lim, Young-Seok,
  Samsung Electronics Co., Ltd.
  Suwon-si, Gyeonggi-do (KR)**

- **Paik, Kyung-Hyun,
  Samsung Electronics Co., Ltd.
  Suwon-si, Gyeonggi-do (KR)**
- **Joo, Jung-Hoon, Samsung Electronics Co., Ltd.
  Suwon-si, Gyeonggi-do (KR)**
- **Moon, Yong-Suk, Samsung Electronics Co., Ltd.
  Suwon-si, Gyeonggi-do (KR)**
- **Lee, Ju-Ho, Samsung Electronics Co., Ltd.
  Suwon-si, Gyeonggi-do (KR)**

(74) Representative: **Lang, Johannes, Dipl.- Ing.
Paten-und Rechtsanwälte,
Bardehle Pagenberg Dost Altenberg Geissler
Galileiplatz 1
81679 München (DE)**

(54) **Apparatus and method for transmitting control information in a mobile communication system**

(57) An apparatus and method for transmitting control information in a mobile communication system are disclosed. The apparatus and method include selecting a pilot signal having different predetermined pilot patterns according to whether the data are received and the data contain an error, and inserting the selected pilot signal into a pilot field of a dedicated physical channel frame as control information and transmitting the dedicated physical channel frame.

FIG.3

**Description**

BACKGROUND OF THE INVENTION

1.Field of the Invention:

The present invention relates to an apparatus and a method for transmitting control information representing whether or not uplink packet data are received in a mobile communication system. More particularly, the present invention relates to an apparatus and a method for transmitting control information without using a separate channel or code.

2. Description of the Related Art

In a code division multiple access (CDMA) mobile communication system, an international mobile telecommunication ('IMT')-2000 standard enabling transmission of voice and high speed data has been developed from an IS-95 standard mainly transmitting/receiving a voice signal. The IMT-2000 standard targets a voice service, a dynamic image service and an Internet search service of high quality.

As described above, the mobile communication system includes various schemes for providing information such as voice, data, etc. The representative scheme is a high speed downlink packet access ('HSDPA') scheme in a universal mobile terrestrial system (UMTS) communication system.

Generally, an HSDPA scheme is the general term for data transmission schemes using high speed-downlink shared channels ('HS-DSCHs'), which are downlink data channels for supporting high speed downlink packet data transmission, and control channels relating to the HS-DSCHs. Further, an adaptive modulation and coding ('AMC') scheme, a hybrid automatic retransmission request ('HARQ') scheme and a fast cell select ('FCS') scheme have been proposed to support a high speed downlink packet data service: Hereinafter, the HARQ scheme, particularly, an n-channel stop and wait hybrid automatic retransmission request ('n-channel SAW HARQ') scheme will be described.

The HARQ scheme has employed the following two methods to improve the transmission efficiency of an automatic retransmission request (ARQ) scheme: one method is to perform a retransmission request and response between a user equipment ('UE') and a node B; and the other method is to enable a UE to temporarily store data having an error, combine the stored data with retransmission data of the corresponding data (data having the error), and decode the combined data. In a single channel SAW HARQ scheme, the next packet data are transmitted only after an ACK for previous packet data are received. However, since the next packet data are transmitted only after the ACK for the previous packet data are received in this way, there may occur a case in which current packet data are not transmitted before the ACK for the previous packet data is received.

In the n-channel SAW HARQ scheme, a plurality of packet data are continuously transmitted without receiving the ACK for the previous packet data, so that the use efficiency of a channel can be improved. That is, n logical channels capable of being distinguished from each other by a specific time or a channel number are set between a UE and a node B. The UE receiving packet data recognizes a channel through which the received packet data have been transmitted and performs necessary processing for the received packet data. For instance, the UE restructures the packet data according to a sequence by which the packet data must be received or performs a soft combining for the packet data.

The following tables 1 and 2 show physical channels used in a downlink and an uplink of a mobile communication system.

Table 1

| Downlink Physical channel | Function |
|---|---|
| DPDCH | Dedicated physical data channel |
| DPCCH | Dedicated physical control channel |
| CPICH | Common pilot channel |
| P-CCPCH | Primary common control physical channel |
| S-CCPCH | Second common control physical channel |
| SCH | Synchronization channel |
| PDSCH | Physical downlink shared channel |

Table 1   (continued)

| Downlink Physical channel | Function |
|---|---|
| AICH | Acquisition indicator channel |
| AP-AICH | Access preamble acquisition indicator channel |
| PICH | Paging indicator channel |
| CSICH | CPCH(common packet channel) status indicator channel |
| CD/CA-ICH | CPCH collision detection/channel assignment indicator channel |
| HS-PDSCH | High speed-physical downlink shared control channel |
| HS-SCCH | High speed-shared control channel |

Table 2

| Uplink Physical channel | Function |
|---|---|
| DPDCH | Dedicated physical data channel |
| DPCCH | Dedicated physical control channel |
| PRACH | Physical random access channel |
| PCPCH | Physical common packet channel |
| HS-DPCCH | High speed-dedicated physical control channel |

The downlink physical channels are distinguished from each other by means of orthogonal variable spreading factors ('OVSFs') code.

In a mobile communication system, a scheme similar to a scheme for supporting a packet data service through a downlink may be introduced to support a packet data service through an uplink. That is, similar to a downlink, a stop and wait automatic retransmission request (SAW ARQ) scheme and the n-channel SAW HARQ scheme may be introduced.

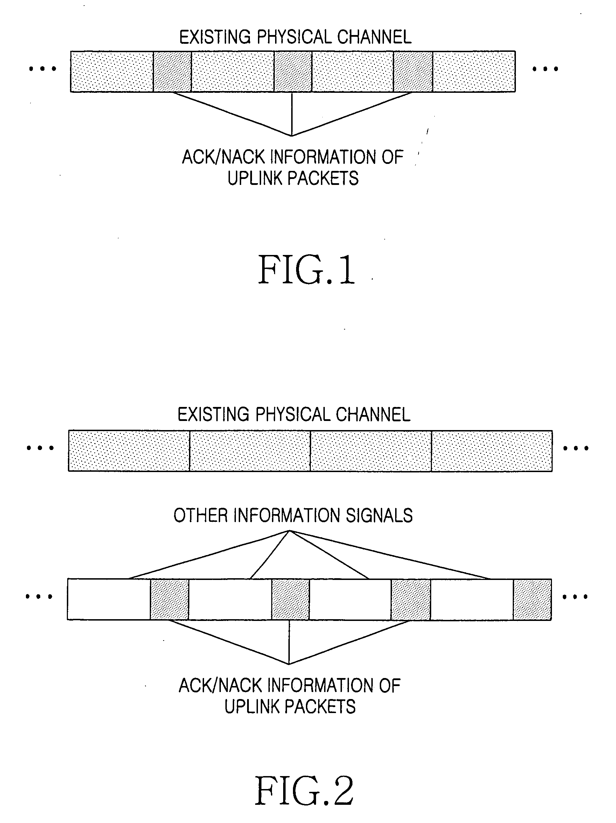

In an uplink packet data service using the ARQ scheme and the n-channel SAW HARQ scheme, a scheme for transmitting control information ('ACK/NACK information') regarding whether or not the packet data have been received without an error by means of a downlink will be described. The scheme for transmitting the ACK/NACK information by means of the downlink may be classified into a time multiplexing scheme and a code multiplexing scheme. Hereinafter, the time multiplexing scheme will be described with reference to FIG. 1 and the code multiplexing scheme will be described with reference to FIG. 2.

FIG. 1 shows the downlink physical channel. The kind and the functions of the downlink physical channels are as shown in table 1. Referring to FIG. 1, the ACK/NACK information is time-multiplexed in a space obtained by puncturing the data of the physical channel and is then transmitted. That is, the physical channel transports the ACK/NACK information contained in a predetermined interval in which data are not transmitted.

FIG. 2 is a view illustrating a process by which code-multiplexed ACK/NACK information is transmitted through the downlink physical channel. Referring to FIG. 2, a separate physical channel for transmitting the ACK/NACK information is generated in addition to the conventional physical channel transporting data, and the ACK/NACK information is transmitted through the generated physical channel. The conventional physical channel and the physical channel for transmitting the ACK/NACK information are distinguished from each other by the OVSF code as described above. Further, the physical channel for transmitting the ACK/NACK information may contain control information indicating an ACK/NACK information transmission channel.

In the scheme shown in FIG. 1, since the ACK/NACK information must be inserted into a predetermined interval of the conventional physical channel, data transmitted through the conventional physical channel may be lost. Further, in the scheme shown in FIG. 2, data transmitted through the conventional physical channel are not lost, but power for the physical channel generated for transmitting the ACK/NACK information and an additional OVSF code must be used.

## SUMMARY OF THE INVENTION

Accordingly, the present invention has been made to solve the above-mentioned problems occurring in the prior art, and it an object of the present invention to provide an apparatus and a method for transmitting control information for packet data without using a separate channel.

It is another object of the present invention to provide an apparatus and a method for transmitting control information for packet data without data loss.

It is further another object of the present invention to provide an apparatus and a method capable of preventing the transmission performance of a system from being deteriorated by transmitting control information without using a separate channel or code.

In order to accomplish the aforementioned object, according to one aspect of the present, there is provided a method for transmitting information regarding whether data are received in a mobile communication system. The method comprising generating a pilot signal having different predetermined pilot patterns according to whether the data are received and the data contain an error, and inserting the generated pilot signal into a pilot field of a physical channel frame as control information and transmitting the physical channel frame.

In order to accomplish the aforementioned object, according to one aspect of the present, there is provided a method for transmitting information regarding whether or not data are received in a mobile communication system. The method comprising detecting a pilot signal that was inserted into a pilot field of a physical channel frame as control information for the transmitted data, and determining whether the data are received and the data contain an error based on a pilot pattern of the detected pilot signal, and determining whether the data are retransmitted based on a result of the determination.

In order to accomplish the aforementioned object, according to one aspect of the present, there is provided an apparatus for receiving information regarding whether transmitted data are received in a mobile communication system. The apparatus comprises a pilot pattern generator for generating a pilot signal having different predetermined pilot patterns according to whether the data are received and the data contain an error, a pilot pattern inserting unit for inserting the selected pilot signal into a pilot field of a physical channel frame as control information, and a modulator for modulating and transmitting the physical channel frame.

In order to accomplish the aforementioned object, according to one aspect of the present, there is provided an apparatus for receiving information regarding whether transmitted data are received in a mobile communication system. The apparatus comprises a channel estimator for detecting a pilot signal that was inserted into a pilot field of a physical channel frame as control information for the transmitted data, and a packet channel adjuster for determining whether the data are received and the data contain an error by a pilot pattern of the detected pilot signal and determining whether the data are retransmitted by a result of the checking.

## BRIEF DESCRIPTION OF THE DRAWINGS

The above and other objects, features and advantages of the present invention will be more apparent from the following detailed description taken in conjunction with the accompanying drawings, in which:

FIG. 1 is a view illustrating a process by which control information is time-multiplexed in a physical channel according to the prior art;

FIG. 2 is a view illustrating a process by which control information is code-multiplexed in a physical channel according to the prior art;

FIG. 3 is a block diagram illustrating the structure of a transmitter according to a first embodiment of the present invention;

FIG. 4 is a block diagram illustrating the structure of a receiver according to a first embodiment of the present invention;

FIG. 5 is a block diagram illustrating the structure of a control signal extractor according to a first embodiment of the present invention;

FIG. 6 is a flow diagram illustrating operations performed in a transmitter and a receiver according to a first embodiment of the present invention;

FIG. 7 is a block diagram illustrating the structure of a transmitter according to a second embodiment of the present invention;

FIG. 8 is a block diagram illustrating the structure of a receiver according to a second embodiment of the present invention;

FIG. 9 is a block diagram illustrating the structure of a channel estimator according to a second embodiment of the present invention;

FIG. 10 is a flow diagram illustrating operations performed in a transmitter and a receiver according to a second embodiment of the present invention;

FIG. 11 is a block diagram illustrating the structure of a transmitter according to a third embodiment of the present invention;

FIG. 12 is a block diagram illustrating the structure of a receiver according to a third embodiment of the present invention;

FIG. 13 is a block diagram illustrating the structure of a channel estimator according to a third embodiment of the present invention; and

FIG. 14 is a flow diagram illustrating operations performed in a transmitter and a receiver according to a third embodiment of the present invention.

## DETAILED DESCRIPTION OF THE PREFERRED EMBODIMENTS

Hereinafter, embodiments according to the present invention will be described with reference to the accompanying drawings. In the following description of the present invention, a detailed description of known functions and configuration incorporated herein will be omitted for conciseness.

The present invention provides a scheme for transmitting/receiving control information by means of a symbol/bit pattern of a conventional pilot channel without transmitting the control information by means of a separate code or time. The present invention discloses three embodiments. The first embodiment provides a scheme for transmitting an ACK/NACK as control information through the pilot field of a dedicated physical channel ('DPCH'). The second embodiment provides a scheme for using the pilot field of a DPCH as a reference for supporting a beamforming and simultaneously transmitting an ACK/NACK as control information through the pilot field. The third embodiment provides a scheme for transmitting an ACK/NACK/MISS as control information according to the generation of an orthogonal pattern set. In the third embodiment, only a method for transmitting the ACK/NACK/MISS as the control information will be described. Further, in addition to the ACK/NACK/MISS, other control information can also be transmitted without departing from the scope of the present invention.

First Embodiment

Hereinafter, the first embodiment of the present invention will be described in detail with reference to the accompanying drawings.

The first embodiment proposed by the present invention relates to a method for transmitting ACK/NACK information through a phase modulation for the pilot field of an existing downlink DPCH. In the first embodiment, it is assumed that a phase reference of a dedicated channel is a common control channel (CPICH). The downlink dedicated physical channel (DPCH), which is a dedicated channel, is transmitted after a dedicated physical control channel (DPCCH) (i.e., control channel) and a dedicated physical data channel (DPDCH) (i.e., data channel) are time-multiplexed. Further, the phase reference of the dedicated channel has been transmitted through the DPCCH. That is, a pilot field capable of being used as a reference for supporting a dedicated channel estimation and a beam forming for channel compensation has been transmitted through the DPCCH. In the first embodiment of the present invention, a CPICH replaces the role of the pilot field.

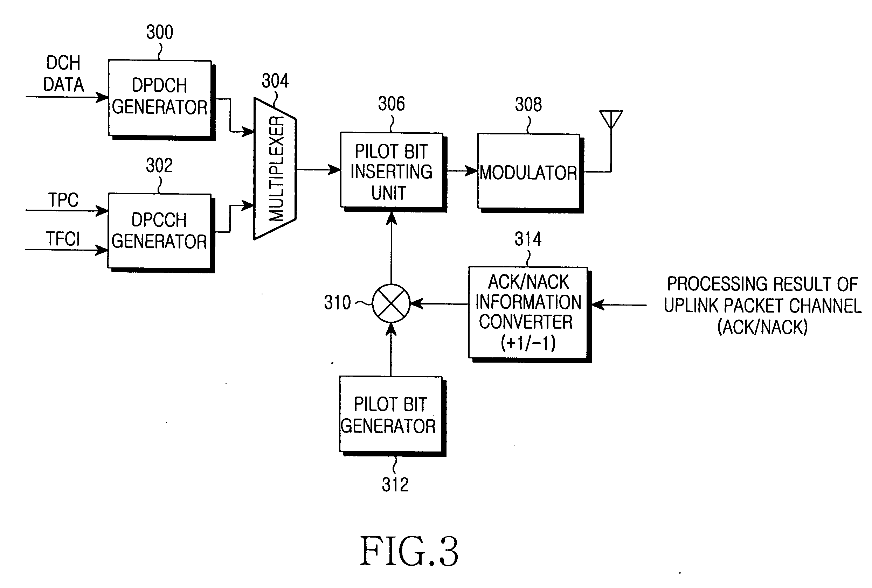

FIG. 3 is a block diagram illustrating the structure of a transmitter for transmitting ACK/NACK information according to the first embodiment of the present invention.

Hereinafter, the structure of the transmitter for transmitting the ACK/NACK information according to the first embodiment of the present invention will be described with reference to FIG. 3. The transmitter includes a DPDCH generator 300, a DPCCH generator 302, a mutiplexer 304, a pilot bit inserting unit 306, a modulator 308, a pilot bit generator 312, an ACK/NACK information converter 314 and a multiplier 310.

A node B having received uplink packet data from a UE demodulates the received data. As a result of the demodulation, the node B analyzes whether the received data contain an error and generates ACK/NACK information. When the received data contain an error, the node B generates NACK information requesting retransmission of the packet data. In contrast, when the received data does not contain an error, the node B generates ACK information which does not request the retransmission of the packet data. The generated ACK/NACK information is transmitted to the ACK/NACK information converter 314.

The ACK/NACK information converter 314 generates a specific ACK/NACK signal according to the received ACK/NACK information. That is, when the received information is the ACK information, the ACK/NACK information converter 314 generates a signal having a value of +1. In contrast, when the received information is the NACK information, the ACK/NACK information converter 314 generates a signal having a value of -1. The ACK/NACK signal generated according to the received information may have different values by a user's selection. That is, in another embodiment, when the received information is the ACK information, the ACK/NACK information converter 314 may generate -1. In contrast, when the received information is the NACK information, the ACK/NACK information converter 314 may generate +1. However, generally, the ACK/NACK information converter 314 outputs +1 as a basic value and generates -1 when the received ACK/NACK information is the ACK information. The reason for setting the basic value of the ACK/NACK information converter 314 as +1 is that it is necessary to satisfy the condition proposed by the conventional standard when the ACK/NACK information is not transmitted. The ACK/NACK information converter 314 outputs the generated ACK/NACK signal to the multiplier 310.

Meanwhile, the pilot bit generator 312 generates a pilot signal having a predetermined pilot pattern. The generated pilot pattern is defined by a 3rd Generation Partnership Project (3GPP) standard TS25.211. However, it is clear that the embodiments of the present invention can easily employ other pilot patterns. The generated pilot signal is sent to the multiplier 310. The multiplier 310 performs a multiplication for the received pilot signal and the ACK/NACK signal transmitted from the ACK/NACK information converter 314. The following equation 1 represents an operation performed by the multiplier 310.

## Equation 1

$$S_i(n) = \begin{cases} A(i) \times p_i(n), n \in \{Pilot\ Field\} \\ 0 \qquad\qquad, n \notin \{Pilot\ Field\} \end{cases},$$

wherein the $S_i(n)$ is an output signal of the multiplier 310, the $A(i)$ is an ACK signal or an NACK signal (i.e., +1 or -1) transmitted from the ACK/NACK information converter 314 corresponding to a 1th slot, the $p_i(n)$ is a pilot signal of a downlink DPCH corresponding to an ith slot, and the n is a slot index representing time slots of a physical channel and is classified into pilot fields representing slots including a pilot signal and other fields. According to equation 1, when the n does not represent the pilot field, the multiplier 310 outputs "0". The pilot signal containing the ACK/NACK information, which is an output of the multiplier 310, is transmitted to the pilot bit inserting unit 306.

Meanwhile, the DPDCH generator 300 generates DPDCH data by means of a received dedicated channel ('DCH') and transmits the generated DPDCH data to the mutiplexer 304. The DPCCH generator 302 generates DPCCH data by means of transmit power control ('TPC') information of a DPDCH and a transport format combination indicator ('TFCI'), and transmits the generated DPCCH data to the mutiplexer 304. The mutiplexer 304 transmits DPCH data obtained by multiplexing the received DPDCH data and DPCCH data to the pilot bit inserting unit 306.

The pilot bit inserting unit 306 outputs a DPCH frame obtained by time-multiplexing the signal transmitted from the multiplier 310 with the DPCH data. The time-multiplexed DPCH frame is modulated by the modulator 308 and is then sent through a transmission antenna.

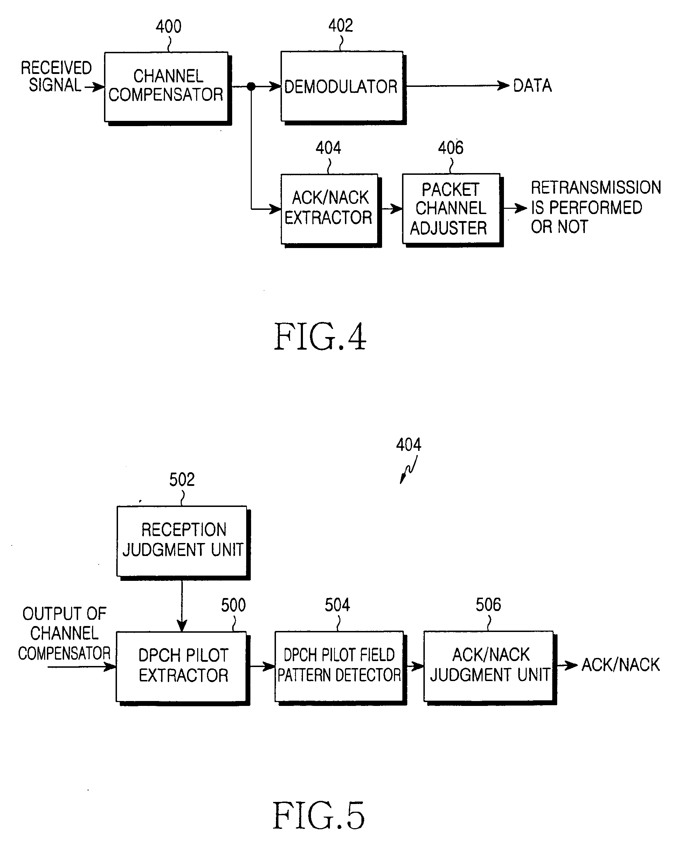

FIG. 4 is a block diagram showing the structure of a receiver according to the first embodiment of the present invention. Data transmitted through a DPDCH and control signals transmitted through a DPCCH may be demodulated through each separate path. However, in an embodiment of the present invention, in order to make the subject matter of the invention clear, only a processing path (concern object) through which ACK/NACK information is processed will be described.

In the receiver shown in FIG. 4, the DPCH signal transmitted from the transmitter is demodulated and is then sent to a channel compensator 400. The received signal that experienced a channel compensation process in the channel compensator 400 is modulated by a modulator 402. Further, the received signal that experienced channel compensation in the channel compensator 400 is sent to an ACK/NACK extractor 404. The ACK/NACK extractor 404 extracts ACK/NACK information from the pilot signal contained in the received signal. The detailed structure of the ACK/NACK extractor 404 will be described with reference to FIG. 5 later. The ACK/NACK information extracted by the ACK/NACK extractor 404 is sent to a packet channel adjuster 406. The packet channel adjuster 406 determines whether the previously transmitted uplink packet data are retransmitted according to the received ACK/NACK information.

In FIG. 4, the pilot signal is extracted after the channel compensator 400. However, in another embodiment, a pilot signal extracted before the channel compensator 400 may be used in order to perform a channel estimation. That is, in this embodiment of the present invention, the pilot signal used for determination of an ACK/NACK may be extracted at any position regardless of a channel compensation process. Those who are skilled in the art can easily construct the receiver regardless of extracted positions of the pilot signal.

FIG. 5 is a block diagram showing the structure of the ACK/NACK extractor 404 according to the first embodiment of the present invention. The ACK/NACK extractor 404 includes a DPCH reception judgment unit 502, a DPCH pilot extractor 500, a DPCH pilot field pattern detector 504 and an ACK/NACK judgment unit 506. Hereinafter, the structure of the ACK/NACK extractor 404 will be described in detail with reference to FIG. 5.

The DPCH reception judgment unit 502 determines whether a channel to be currently received is a DPCH. When the channel to be currently received is the DPCH and a current time (time slot) is a time at which a processing result (i.e., ACK/NACK information) for a channel decoding of an uplink packet channel must be received, the other elements 500, 504 and 506 of FIG. 5 operate.

When the DPCH reception judgment unit 502 determines that the channel to be received is the DPCH and the current time is a time at which the receiver must receive information for the channel decoding result, the DPCH pilot extractor 500 extracts only a pilot field component of the DPCH signal from the reception signal which is an output of the channel compensator 400 and outputs the extracted pilot field component to the DPCH pilot field pattern detector 504. The following equation 2 represents the signal transmitted to the DPCH pilot field pattern detector 504.

Equation 2

$$r_i(n) = A(i) \cdot |h(i,n)|^2 \cdot p_i(n), \ n \in \{pilot\ field\},$$

wherein the $r_i(n)$ represents an $n^{th}$ pilot signal of an $i^{th}$ slot, and the $h(i,n)$ is a padding response signal representing channel environments which the $n^{th}$ pilot signal of the $i^{th}$ slot has experienced. The DPCH pilot field pattern detector 504 detects a pilot field pattern of a DPCH signal as shown in equation 2 by means of a slot format of a DPCH and a slot number in one frame of a DPCH being currently demodulated. The slot number in one frame and a pilot pattern corresponding to the slot number are defined by a 3GPP standard TS25.211. However, it is clear that the embodiments of the present invention can easily employ pilot patterns different from the above pilot pattern. The following equation 3 represents a signal output from the DPCH pilot field pattern detector 504.

Equation 3

$$Y_i = \frac{1}{N_{pilot}} \sum_{n=N_{start}}^{N_{end}} r_i(n) \cdot p_i^*(n) \ ,$$
$$= A(i) \cdot |h(i,n)|^2 \cdot |p|^2$$

wherein the $N_{pilot}$ represents the number of pilot symbols contained in a pilot field, the $N_{start}$ represents a start symbol index of the pilot field, the $N_{end}$ represents the last symbol index of the pilot field and the $|p|^2$ represents power of the pilot symbols. In equation 3, a component capable of having a sign is the A(i). Accordingly, the ACK/NACK detection unit 506 determines whether the previously transmitted uplink packet data are retransmitted by means of a sign component A(i) of a $Y_i$ transmitted from the DPCH pilot field pattern detector 504. Herein, when the $Y_i$ has the positive sign, it is determined that the retransmission of the previously transmitted data has been requested.

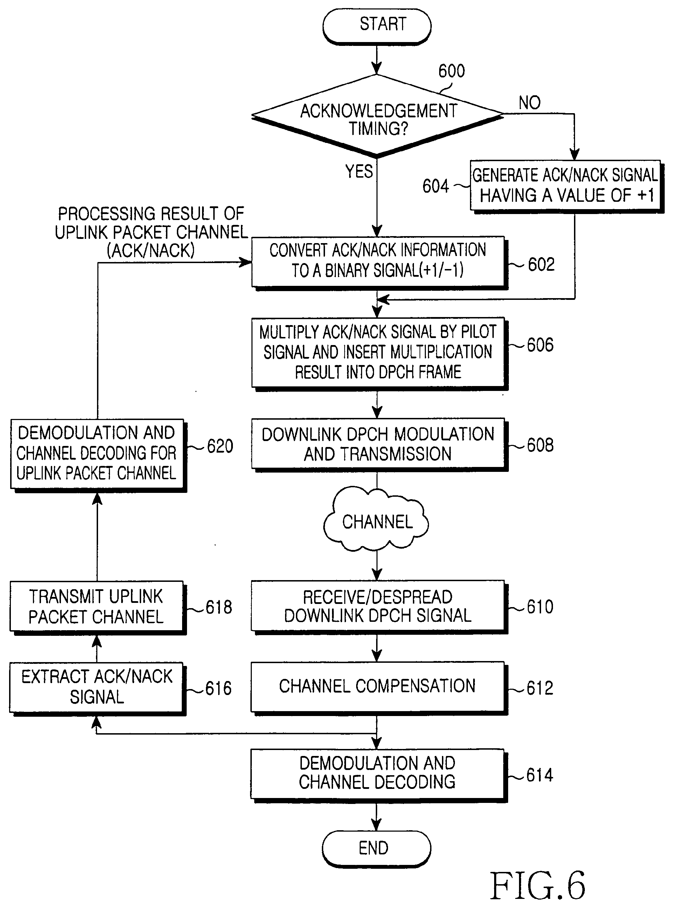

FIG. 6 is a flow diagram illustrating operations of the transmitter and the receiver according to the first embodiment of the present invention. Hereinafter, the operations of the transmitter and the receiver according to the first embodiment of the present invention will be described in detail with reference to FIG. 6.

In step 600, the transmitter determines whether a current timing is an acknowledgement timing for packet data. Specifically, in step 600, whether received packet data contain an error and the data are retransmitted are determined. As a result of the determination, when the current timing is the acknowledgement timing, step 602 is performed. In contrast, when the current timing is not the acknowledgement timing, step 604 is performed. Herein, that the current timing is not the acknowledgement timing may represent a case in which a node B have not received the uplink packet data transmitted from a UE.

In step 602, the transmitter converts a processing result of the uplink packet channel into a binary ACK/NACK signal. The ACK/NACK signal has a value of +1 or -1. The value +1 implies that an error has occurred in the received packet data and the value -1 implies that an error has not occurred in the received packet data. In step 604, an ACK/NACK signal having a value of +1 as a basic value is generated. In step 606, the transmitter multiplies the ACK/NACK signal by a pilot signal and inserts the multiplication result into a DPCH frame. In step 608, the transmitter modulates the DPCH frame and transmits the modulated DPCH frame to the receiver. A progress to step 610 from step 608 corresponds to transmission on a radio channel.

In step 610, the receiver receives the DPCH signal transmitted from the transmitter and despreads the received DPCH signal. Then, step 612 is performed. That is, the receiver performs a channel compensation process. In step 614, the receiver performs a demodulation and a channel decoding for the received signal that experienced the channel compensation process. Meanwhile, in step 616, the receiver extracts the ACK/NACK signal from the received signal that experienced the channel compensation process. A process of extracting the ACK/NACK signal is as described in FIG. 5.

In step 618, the receiver determines whether the uplink packet data are retransmitted on the basis of the ACK/NACK signal. That is, in the case of the NACK, the previously transmitted packet data are retransmitted. In contrast, in the case of the ACK, new packet data are retransmitted. In step 620, the transmitter performs a demodulation and a decoding for the uplink packet data, determines whether an error has occurred in the uplink packet data, and sends a processing result for the uplink packet channel to step 602.

Generally, when a beam forming technology is used in a system, a pilot field transmitted through a DPCCH is used as a phase reference in a channel estimation process performed for generating an exact beam according to each UE. Herein, when the method as described in the first embodiment is used, the phase of a dedicated pilot is inverted according to an ACK or an NACK and a pilot pattern different from the pilot pattern already known to a node B and a UE is transmitted. Therefore, there may occur a case in which a channel estimation cannot be performed. Accordingly, a second embodiment which will be described hereinafter proposes a scheme of inserting ACK/NACK information into a pilot signal and transmitting the pilot signal without influencing a channel estimation using the dedicated pilot.

Second Embodiment

Hereinafter, the second embodiment of the present invention will be described in detail with reference to the accompanying drawings.

In the first embodiment, it is assumed that a CPICH is a phase reference of a dedicated channel. In such a case, the phase of a dedicated pilot signal is inverted according to an ACK or an NACK, so that a channel estimation cannot be performed. Accordingly, the second embodiment proposes a scheme of inserting ACK/NACK information into a pilot field without influencing a channel estimation using the dedicated pilot signal. In the second embodiment, when a beamforming is used, the pilot field of a DPCH instead of a CPICH is used as a phase reference for a channel estimation.

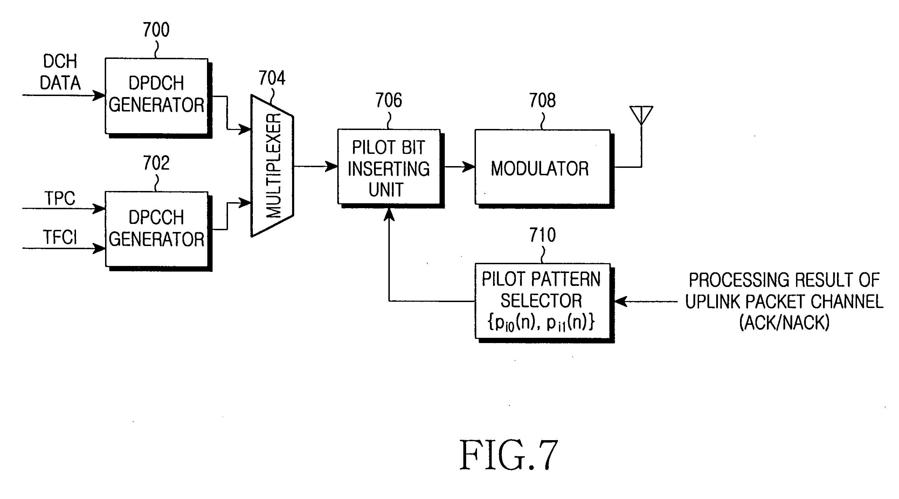

FIG. 7 is a block diagram showing the structure of a transmitter for transmitting ACK/NACK information according to the second embodiment of the present invention. The second embodiment proposes a scheme for transmitting the ACK/NACK information by means of the pilot field of the conventional downlink DPCH. The transmitter includes a DPDCH generator 700, a DPCCH generator 702, a mutiplexer 704, a pilot pattern inserting unit 706, a modulator 708 and a pilot pattern selector 710.

A node B having received uplink packet data from a UE demodulates the received data. As a result of the demodulation, the node B analyzes whether the received data contain an error and generates ACK/NACK information. When the received data contain an error, the node B generates NACK information requesting retransmission of the packet data. In contrast, when the received data does not contain an error, the node B generates ACK information which does not request the retransmission of the packet data. The generated ACK/NACK information is transmitted to the pilot pattern selector 710.

The pilot pattern selector 710 generates a specific ACK/NACK signal according to the received ACK/NACK information. That is, when the received ACK/NACK information is ACK information, the pilot pattern selector 710 generates a preset $p_{i1}(n)$. In contrast, when the received information is NACK information, the pilot pattern selector 710 generates a preset $p_{i0}(n)$. The $p_{i0}(n)$ is the same as a pilot pattern for the conventional $i^{th}$ slot and the $p_{i1}(n)$ is a new pilot pattern defined to be perpendicular to the $p_{i0}(n)$. It is possible to define the $p_{i1}(n)$ having orthogonality for all $p_{i0}(n)$ in relation to an $N_{pilot}$ larger than or equal to 2. The ACK/NACK pilot signal, which is an output of the pilot pattern selector 710, is transmitted to the pilot pattern inserting unit 706.

Meanwhile, the DPDCH generator 700 generates DPDCH data by means of a received DCH and transmits the generated DPDCH data to the mutiplexer 704. The DPCCH generator 702 generates DPCCH data by means of a received TPC information and TFCI, and transmits the generated DPCCH data to the mutiplexer 704. The mutiplexer 704 transmits DPCH data obtained by multiplexing the received DPDCH data and DPCCH data to the pilot pattern inserting unit 706.

The pilot pattern inserting unit 706 outputs a DPCH frame obtained by time-multiplexing the ACK/NACK pilot signal transmitted from the pilot pattern selector 710 with the DPCH data. The time-multiplexed DPCH frame is modulated by the modulator 708 and is then sent through a transmission antenna.

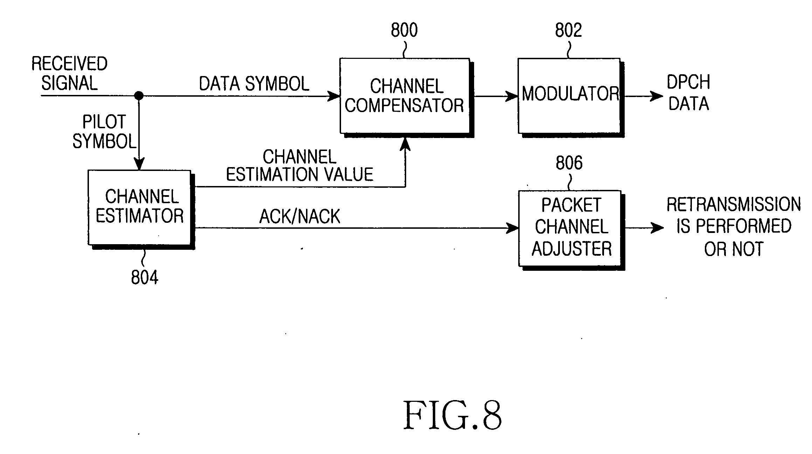

FIG. 8 is a block diagram showing the structure of a receiver according to the second embodiment of the present invention. In the second embodiment, ACK/NACK information is restored in a step before a channel compensation.

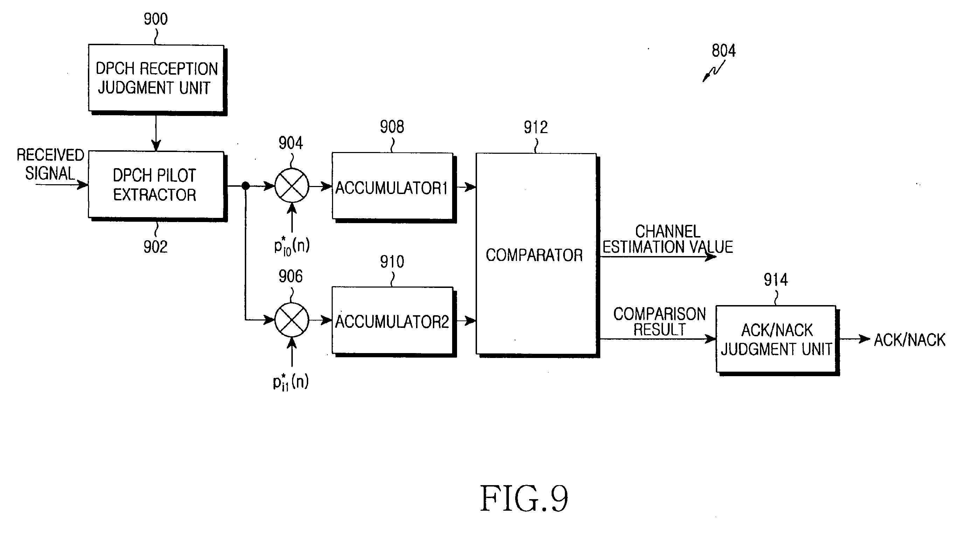

In the receiver shown in FIG. 8, the reception signal transmitted from the transmitter is demodulated and is then sent to a channel estimator 804 and a channel compensator 800. The channel estimator 804 performs a channel estimation process by means of the reception signal and simultaneously extracts a pilot signal used as the ACK/NACK information from the reception signal. The channel estimator 804 will be described in detail with reference to FIG. 9 later. A channel estimated value generated by the channel estimator 804 is sent to the channel compensator 800 and the extracted ACK/NACK information is sent to a packet channel adjuster 806. The received signal that experienced a channel compensation process in the channel compensator 800 is transmitted to a modulator 802. The modulator 802 modulates the received signal to output DPCH data. The packet channel adjuster 806 determines whether uplink packet data are retransmitted according to the received ACK/NACK information.

In FIG. 8, the pilot signal is extracted before the channel estimation. However, in another embodiment, a pilot pattern may be extracted from a data symbol for which a channel compensation has been completed and the extracted pilot pattern used. That is, in this embodiment of the present invention, the pilot signal used as ACK/NACK information may be extracted at any positions regardless of the positions of the channel estimator 804. Those who are skilled in the art can easily construct the receiver regardless of extracted positions of the pilot signal.

FIG. 9 is a block diagram showing the structure of the channel estimator 804 according to the second embodiment of the present invention. The channel estimator 804 includes a DPCH reception judgment unit 900, a DPCH pilot extractor 902, multipliers 904 and 906, accumulators 908 and 910, a comparator 912 and an ACK/NACK judgment unit 914. Hereinafter, the structure of the channel estimator 804 will be described in detail with reference to FIG. 9.

The DPCH reception judgment unit 900 determines whether a channel to be currently received is a DPCH. When the channel to be currently received is the DPCH and a current time (time slot) is a time at which the transmitter must receive a processing result (i.e., ACK/NACK information) for a channel decoding of an uplink packet channel, the other elements 902, 904, 906, 908, 910, 912 and 914 of FIG. 9 operate.

When the DPCH reception judgment unit 900 determines that the channel to be received is the DPCH and the current time is a time at which the receiver must receive information for the channel decoding result, the DPCH pilot extractor 902 extracts only a pilot field component of the DPCH signal from the reception signal and outputs the extracted pilot field component to the multipliers 904 and 906. The multipliers 904 and 906 receive the pilot symbols of the pilot field component. The following equation 4 represents the signals input to the multipliers 904 and 906.

Equation 4

$$\overline{r_i(n)} = h(i,n) \cdot p_{ij}(n), \ n \in \{Pilot \ Field\},$$

wherein the $p_{ij}(n)$ (j=0 or 1) represents a pilot pattern used in the transmitter, the $\overline{r_i(n)}$ represents a received signal that experienced a despreading process before a channel compensation, and the i is a slot index. The multiplier 904 performs a multiplication for the input pilot symbols and a $p^*_{i0}(n)$ which is a pilot pattern assigned to an $i^{th}$ slot and sends the multiplication result to the accumulator 908. The multiplier 906 performs a multiplication for the input pilot symbols and a $p^*_{i1}(n)$ which is perpendicular to the $p^*_{i0}(n)$ and is a pilot pattern assigned to ACK information, and sends the multiplication result to the accumulator 912. The accumulators 908 and 910 accumulate the signals sent from each of the multipliers 904 and 906 by a predetermined period of time. The following equation 5 represents a signal outputted from an $k^{th}$ accumulator according to operations performed by the accumulators 908 and 910.

Equation 5

$$Y_i = \frac{1}{N_{pilot}} \sum_{n=N_{start}}^{N_{end}} r_i(n) \cdot p^*_{ik}(n) = \begin{cases} \overline{h}(i,n) \cdot |P|^2 & j = k \\ 0 & j \neq k \end{cases},$$

As shown in equation 5, when the pilot pattern used in the transmitter is equal to that input to one of the multipliers in the receiver, the output of a corresponding multiplier has a value of $\overline{h}(i,n) \cdot |P|^2$. In contrast, when the pilot pattern used in the transmitter is different from that input to one of the multipliers in the receiver, that is, the two pilot patterns are perpendicular to each other, the output of the corresponding multiplier has a value of 0.

The comparator 912 compares the sizes of the signals transmitted from the accumulators 908 and 910. As a result of the comparison, when the signal transmitted from the accumulator 908 has a size larger than that transmitted from the accumulator 910, the comparator 912 outputs the output of the accumulator 908 as a channel estimation value. In contrast, when the signal transmitted from the accumulator 910 has a size larger than that transmitted from the accumulator 908, the comparator 912 outputs the output of the accumulator 910 as a channel estimation value. The comparator 912 sends the output of the accumulator 908 or the accumulator 910 to the channel compensator 800 according to the comparison result.

Further, the ACK/NACK judgment unit 914 determines an ACK/NACK according to the comparison result and sends the result of the determination to the packet channel adjuster 806. In detail, when the signal transmitted from the accumulator 908 has a size larger than that transmitted from the accumulator 910, the ACK/NACK judgment unit 914 determines the received signal to be an ACK. In contrast, when the signal transmitted from the accumulator 910 has a size larger than that transmitted from the accumulator 908, the ACK/NACK judgment unit 914 determines the received signal to be an NACK.

The detection of an ACK/NACK based on a selected accumulator is performed according to the type of pilot patterns used in the multipliers 904 and 906. That is, when the value of a accumulator accumulating the value of a multiplier multiplying a preset pilot pattern of a corresponding slot is selected, the ACK/NACK judgment unit 914 determines the received signal to be an ACK. In contrast, when the value of a accumulator accumulating the value of a multiplier multiplying a pilot pattern of an ACK information is selected, the ACK/NACK judgment unit 914 determines the received signal to be an NACK.

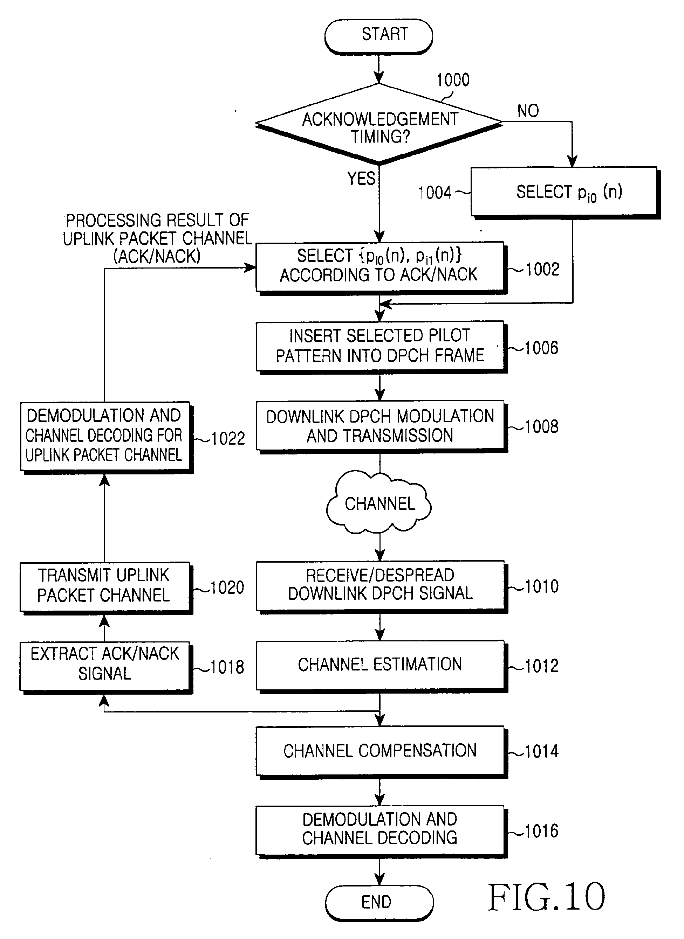

FIG. 10 is a flow diagram illustrating operations of the transmitter and the receiver according to the second embodiment of the present invention. Hereinafter, the operations of the transmitter and the receiver according to the second embodiment of the present invention will be described in detail with reference to FIG. 10.

In step 1000, the transmitter determines whether a current timing is an acknowledgement timing for packet data. Specifically, in step 1000, whether received packet data contain an error and data are retransmitted are determined. As a result of the determination, when the current timing is the acknowledgement timing, step 1002 is performed. In contrast, when the current timing is not the acknowledgement timing, step 1004 is performed. In step 1002, the transmitter selects a pilot pattern corresponding to a processing result of an uplink packet channel. The pilot pattern corresponding to the processing result of the uplink packet channel includes a $p_{i0}(n)$ or a $p_{i1}(n)$. The $p_{i0}(n)$ is a preset pilot pattern of a corresponding $i^{th}$ slot and indicates that there is no error in the received packet data (i.e. ACK). The $p_{i1}(n)$ is a pattern perpendicular to the preset pilot pattern and indicates that an error has occurred in the received packet data (i.e. NACK). In step 1004, the $p_{i0}(n)$ is selected as a pilot pattern.

The pilot pattern selected in step 1002 or step 1004 is sent to step 1006. In step 1006, the transmitter inserts a pilot signal having the selected pilot pattern into a DPCH frame. Then, in step 1008, the transmitter modulates the DPCH frame and transmits the modulated DPCH frame to the receiver. Specifically, a progress to step 1010 from step 1008 corresponds to transmission on a radio channel.

In step 1010, the receiver receives the DPCH signal transmitted from the transmitter and despreads the received DPCH signal. Then, step 1012 is performed. That is, the receiver performs a channel estimation process. In steps 1014 and 1016, the receiver performs a channel compensation, a demodulation and a channel decoding for the received DPCH signal. Meanwhile, in step 1018, the receiver extracts a pilot pattern of a pilot signal corresponding to ACK/NACK information from the received signal that experienced the channel estimation. A process of extracting the ACK/NACK signal is as described in FIG. 9.

In step 1020, the receiver determines whether the uplink packet data are retransmitted on the basis of the ACK/NACK signal. That is, in the case of the NACK, the previously transmitted packet data are retransmitted. In contrast, in the case of the ACK, new packet data are retransmitted.

In step 1022, the transmitter performs a demodulation and a decoding for the received uplink packet data, determines whether there is an error in the uplink packet data through the demodulation and the decoding, and sends a processing result for the uplink packet channel to step 1002.


Third Embodiment


Hereinafter, the third embodiment of the present invention will be described in detail with reference to the accompanying drawings.

The first embodiment and the second embodiment relate to methods for transmitting two types of control information, that is, ACK information and NACK information. However, the third embodiment relates to a method for transmitting two or more types of control information, that is, plural control information within a generation range of an orthogonal pattern set. In the third embodiment, it is assumed that control information is MISS/ACK/NACK information. Further, the third embodiment provides a scheme of inserting MISS/ACK/NACK information into a pilot field without influencing channel estimation using a dedicated pilot. Herein, the MISS as the control information represents an occurrence of a case in which packet data has been transmitted at a predetermined transmission time but a reception side does not recognize the reception of the packet data. In such a case, the reception side transmits MISS information by means of a conventional pilot pattern or a predetermined pilot pattern instead of ACK information or NACK information.

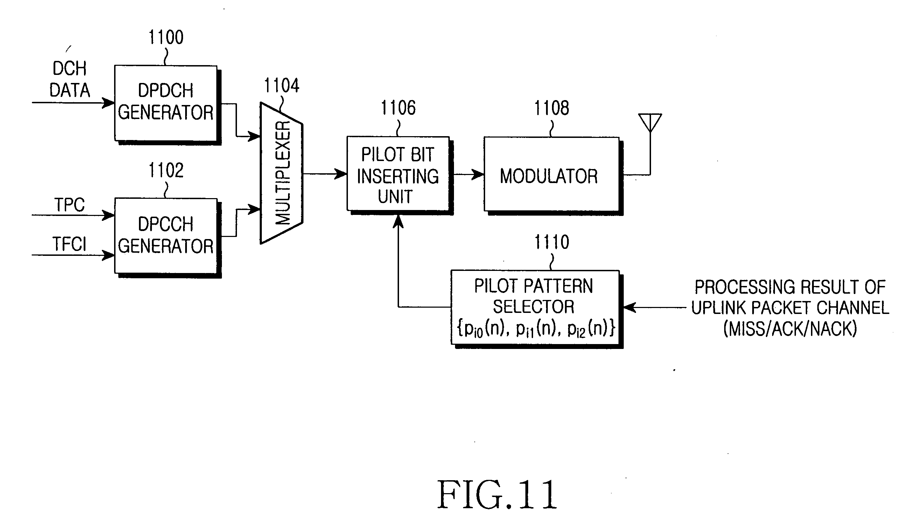

FIG. 11 is a block diagram illustrating the structure of a transmitter for transmitting control information according to the third embodiment of the present invention. The third embodiment provides a scheme for transmitting the MIS/ACK/NACK information by means of the pilot field of the conventional downlink DPCH. The transmitter includes a DPDCH generator 1100, a DPCCH generator 1102, a mutiplexer 1104, a pilot bit inserting unit 1106, a modulator 1108 and a pilot pattern selector 1110.

A node B having received uplink packet data from a UE demodulates the received data. As a result of the demodulation, the node B analyzes whether the received data contain an error and generates control information.

When the received data contain an error, the node B generates NACK information requesting retransmission of the packet data. In contrast, when the received data do not contain an error, the node B generates ACK information representing the normal reception of the corresponding data. However, when it is determined that the packet data are not received at a desired time point, the node B generates MISS information representing that the corresponding data have not been received. The generated control information is transmitted to the pilot pattern selector 1110.

The pilot pattern selector 1110 generates a specific pilot signal according to the received control information. For example, when the control information is the MISS information, the pilot pattern selector 1110 generates a preset $p_{i0}(n)$. When the control information is ACK information, the pilot pattern selector 1110 generates a preset $p_{i1}(n)$. Further, when the control information is NACK information, the pilot pattern selector 1110 generates a preset $p_{i,2}(n)$. The $p_{i0}(n)$ has the same pilot pattern as that for an existing $i^{th}$ slot. The $p_{i1}(n)$ and the $p_{i,2}(n)$ are perpendicular to the $p_{i0}(n)$ and represents a new pilot pattern defined so that the $p_{i1}(n)$ and the $p_{i,2}(n)$ are perpendicular to each other. It is possible to define the $p_{i1}(n)$ and the $p_{i,2}(n)$ having an orthogonality for every $p_{i0}(n)$ in relation to an $N_{pilot}$ larger than or equal to 2. The MISS/ACK/NACK pilot signal, which is an output of the pilot pattern selector 1110, is transmitted to the pilot bit inserting unit 1106.

The DPDCH generator 1100 generates DPDCH data by means of received DCH data and transmits the generated DPDCH data to the mutiplexer 1104. The DPCCH generator 1102 generates DPCCH data by means of a received TPC bit and TFCI bit, and transmits the generated DPCCH data to the mutiplexer 1104. The mutiplexer 1104 transmits DPCH data obtained by multiplexing the received DPDCH data and DPCCH data to the pilot bit inserting unit 1106.

The pilot bit inserting unit 1106 generates a DPCH frame by time-multiplexing the MISS/ACK/NACK pilot signal transmitted from the pilot pattern selector 1110 with the DPCH data. The time-multiplexed DPCH frame is modulated by the modulator 1108 and is then transmitted through a transmission antenna.

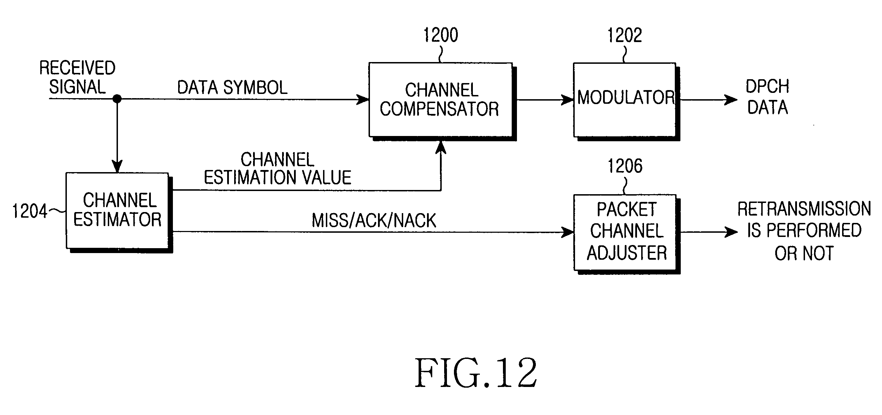

FIG. 12 is a block diagram illustrating the structure of a receiver according to the third embodiment of the present invention. In the third embodiment, the MISS/ACK/NACK information is extracted prior to channel compensation.

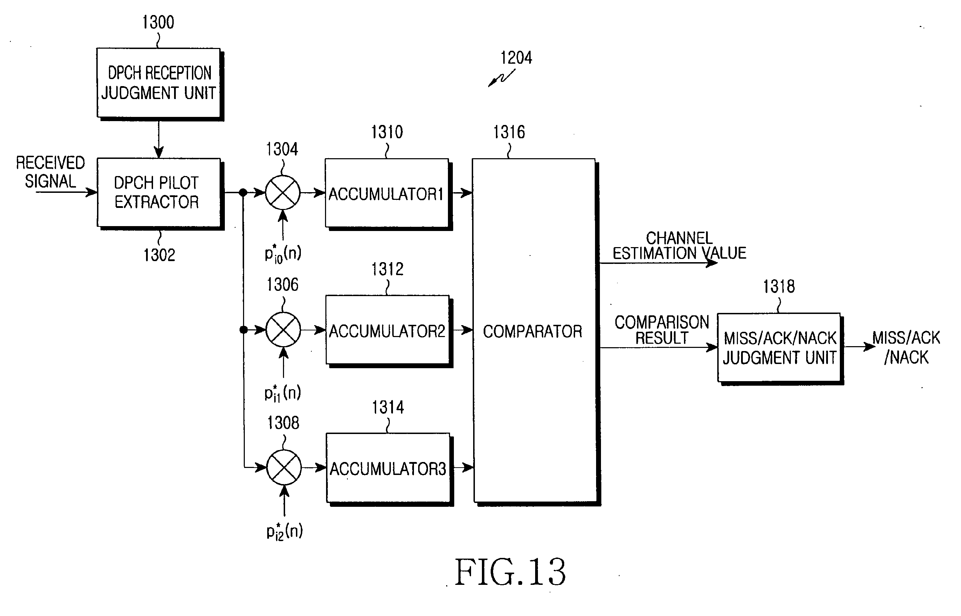

In the receiver shown in FIG. 12, the reception signal transmitted from the transmitter is demodulated and is then transferred to a channel estimator 1204 and a channel compensator 1200. The channel estimator 1204 performs a channel estimation process by means of the reception signal and simultaneously extracts a pilot signal used as the MISS/ACK/NACK information from the reception signal. The channel estimator 1204 will be described in detail with reference to FIG. 13. A channel estimated value generated by the channel estimator 1204 is transferred to the channel compensator 1200 and the extracted MISS/ACK/NACK information is transferred to a packet channel adjuster 1206. The channel compensator 1200 performs a channel compensation process by means of the channel estimated value generated by the channel estimator 1204. The reception signal that experienced the channel compensation process in the channel compensator 1200 is transmitted to a modulator 1202. The modulator 1202 modulates the reception signal to output DPCH data. The packet channel adjuster 1206 determines whether uplink packet data are retransmitted according to the received MISS/ACK/NACK information.

In FIG. 12, the pilot signal is extracted before channel estimation occurs. However, in another embodiment, a pilot pattern may be extracted from a data symbol for which a channel compensation has been completed and the extracted pilot pattern used. That is, in this embodiment of the present invention, the pilot signal used as MISS/ACK/NACK information may be extracted at any position regardless of the position of the channel estimator 1204. Those who are skilled in the art can easily construct the receiver regardless of extracted positions of the pilot signal.

FIG. 13 is a block diagram illustrating the structure of the channel estimator 1204 according to the third embodiment of the present invention. The channel estimator 1204 includes a DPCH reception judgment unit 1300, a DPCH pilot extractor 1302, multipliers 1304, 1306 and 1308, accumulators 1310, 1312 and 1314, a comparator 1316 and a MISS/ACK/NACK judgment unit 1318. Hereinafter, the structure of the channel estimator 1204 will be described in detail with reference to FIG. 13.

The DPCH reception judgment unit 1300 determines whether a channel to be currently received is a DPCH. When the channel to be currently received is the DPCH and a current time (time slot) is a time at which the transmitter must receive a processing result (such as MISS/ACK/NACK information) for a channel decoding of an uplink packet channel, the other elements 1302, 1304, 1306, 1308, 1310, 1312, 1314, 1316 and 1318 of FIG. 13 operate.

When the DPCH reception detection unit 1300 determines that the channel to be received is the DPCH and the current time is a time at which the receiver must receive information for the channel decoding result, the DPCH pilot extractor 1302 extracts only a pilot field component of the DPCH signal from the reception signal and outputs the extracted pilot field component to the multipliers 1304, 1306 and 1308.

The multipliers 1304, 1306 and 1308 receive the pilot symbols of the pilot field component. The following equation 6 represents the pilot signals input to the multipliers 1304, 1306 and 1308.

Equation 6

$$\overline{r_i(n)} = h(i, n) \cdot p_{ij}(n), \, n \in \{Pilot\ Field\},$$

wherein the $p_{ij}(n)$ (j=0, 1 or 2) represents a pilot pattern used in the transmitter, the $\overline{r_i(n)}$ represents a received signal that experienced a despreading process prior to channel compensation, and the i is a slot index. The multiplier 1304 performs a multiplication for the input pilot symbols and a $p_{i0}^{*}(n)$ which is a pilot pattern assigned to an ith slot and transfers the multiplication result to the accumulator 1310. The multiplier 1306 performs multiplication for the input pilot symbols and a $p_{i1}^{*}(n)$ which is perpendicular to the $p_{i0}^{*}(n)$ and is a pilot pattern assigned to ACK information, and transfers the multiplication result to the accumulator 1312. The multiplier 1308 performs multiplication for the input pilot symbols and a $p_{i2}^{*}(n)$ which is perpendicular to the $p_{i0}^{*}(n)$ and the $p_{i1}^{*}(n)$ and is a pilot pattern assigned to MISS information, and transfers the multiplication result to the accumulator 1314. The accumulators 1310, 1312 and 1314 accumulate the signals received from each of the multipliers 1304, 1306 and 1308 by a predetermined period of time. The following equation 7 represents a signal output from a kth accumulator of the accumulators 1310, 1312 and 1314.

Equation 7

$$Y_i = \frac{1}{N_{pilot}} \sum_{n=N_{start}}^{N_{end}} r_i(n) \cdot p_{ik}^{*}(n) = \begin{cases} \overline{h}(i,n) \cdot |P|^2 & j = k \\ 0 & j \neq k, \end{cases}$$

In equation 7, the k represents an index designating a specific accumulator. For example, an index designating the accumulator 1310 is 0, an index designating the accumulator 1312 is 1, and an index designating the accumulator 1314 is 2.

As expressed by equation 7, when the pilot pattern used in the transmitter is equal to that input to one of the multipliers in the receiver, the output of the corresponding multiplier has a value of $\overline{h}(i) \cdot |P|^2$. In contrast, when the pilot pattern used in the transmitter is different from that input to one of the multipliers in the receiver, that is, the two pilot patterns are perpendicular to each other, the output of the corresponding multiplier has a value of 0.

The comparator 1316 compares the sizes of the signals transmitted from the accumulators 1310, 1312 and 1314. The comparison of the size may be replaced with a comparison of absolute values of the signals. As a result of the comparison, the comparator 1316 selects and outputs the largest one of the signals from the accumulators 1310, 1312 and 1314. Herein, a k value corresponding to the selected signal or control information corresponding to the k value is output.

When the k value is output, the control information may be determined by the k value. For example, when the signal transferred from the accumulator 1310 is larger than the signals transferred from the accumulators 1312 and 1314, the comparator 1316 outputs the output value of the accumulator 1310 as a channel estimation value. Herein, a value 0 is output as a k value designating the accumulator 1310. As a result of the comparison, when the signal transferred from the accumulator 1312 is larger than the signals transferred from the accumulators 1310 and 1314, the comparator 1316 outputs the output value of the accumulator 1312 as a channel estimation value. Herein, a value 1 is output as a k value designating the accumulator 1312. Further, when the signal transferred from the accumulator 1314 is larger than the signals transferred from the accumulators 1310 and 1312, the comparator 1316 outputs the output value of the accumulator 1314 as a channel estimation value. Herein, a value 2 is output as a k value designating the accumulator 1314.

When only the k value is output from the comparator 1316, the MISS/ACK/NACK judgment unit 1318 determines control information. That is, the MISS/ACK/NACK detection unit 1318 determines whether the k value output from the comparator 1316 is MISS information, ACK information or NACK information and notifies the packet channel adjuster 1206 of the determination. For example, when the k value is 0, the MISS/ACK/NACK judgment unit 1318 determines that the control information is the MISS information. When the k value is 1, the MISS/ACK/NACK detection unit 1318 determines that the control information is the ACK information. Further, when the k value is 2, the MISS/ACK/NACK judgment unit 1318 determines that the control information is the NACK information. This determination is performed according to the pilot patterns used in the multipliers 1304, 1306 and 1308 and a predetermined reference for determining the control information by the k values.

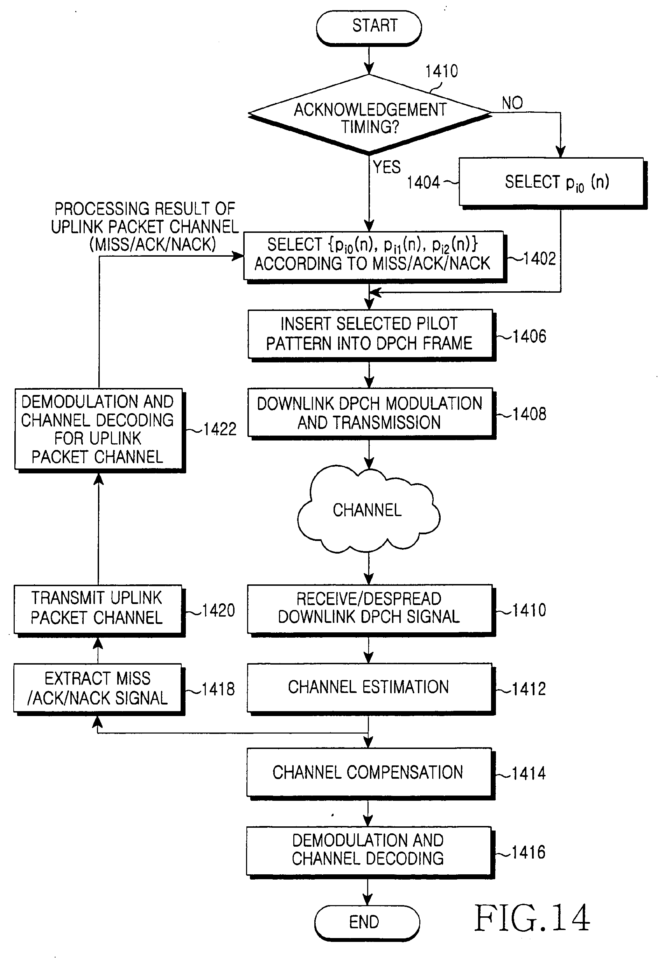

FIG. 14 is a flow diagram illustrating operations of the transmitter and the receiver according to the third embodiment of the present invention. Hereinafter, the operations of the transmitter and the receiver according to the third embodiment of the present invention will be described in detail with reference to FIG. 14.

In step 1400, the transmitter determines whether a current timing is an acknowledgement timing for packet data. Further, in step 1400, the transmitter determines whether received packet data contain an error and data are retransmitted. As a result of the determination, when the current timing is the acknowledgement timing, step 1402 is performed. In contrast, when the current timing is not the acknowledgement timing, step 1404 is performed.

In step 1402, the transmitter selects a pilot pattern corresponding to a processing result of an uplink packet channel. The pilot pattern corresponding to the processing result of the uplink packet channel includes a $p_{i0}(n)$, a $p_{i1}(n)$ or a $p_{i2}(n)$. The $p_{i0}(n)$ is a preset pilot pattern of a corresponding $i^{th}$ slot and indicates that corresponding packet data have not been received, that is MISS. The $p_{i1}(n)$ is a pattern perpendicular to the preset pilot pattern and indicates that the received packet data do not contain an error, that is, ACK. Further, the $p_{i2}(n)$ is a pattern perpendicular to the preset pilot pattern and indicates that the received packet data contain an error, that is, NACK. In step 1404, the conventional pilot pattern $p_{i0}(n)$ is selected.

When the pilot pattern is determined in step 1402 or step 1404, step 1406 is performed. In step 1406, the transmitter inserts a pilot signal having the selected pilot pattern into a DPCH frame through time multiplexing. Then, in step 1408, the transmitter modulates the DPCH frame and transmits the modulated DPCH frame to the receiver. Specifically, progress to step 1010 from step 1008 corresponds to transmission on a radio channel.

In step 1410, the receiver receives the DPCH signal transmitted from the transmitter and despreads the received DPCH signal. Then, step 1412 is performed to allow the receiver to perform a channel estimation process. In steps 1414 and 1416, the receiver performs channel compensation, and a demodulation and a channel decoding for the received DPCH signal. Meanwhile, in step 1418, the receiver extracts a pilot pattern of a pilot signal corresponding to MISS/ACK/NACK information from the received signal that experienced the channel estimation, thereby obtaining the control information from the transmitter. A process of obtaining the control information by extracting the pilot pattern is as described in FIG. 13. That is, the receiver obtains the control information from the transmitter by comparing the sizes of correlation values of the signals that experienced the channel estimation process. For example, when the MISS information is obtained as the control information, the receiver determines that the transmitter has not received the desired packet data. When the ACK information is obtained as the control information, the receiver determines that the transmitter has normally received the desired packet data. Further, when the NACK information is obtained as the control information, the receiver determines that the desired packet data received in the transmitter contain an error. Then, in step 1420, the receiver retransmits the previously transmitted packet data or transmits the next packet data.

In step 1422, the transmitter performs a demodulation and a decoding for the received uplink packet data, determines whether there is an error in the uplink packet data through the demodulation and the decoding, and outputs control information corresponding to a processing result for the uplink packet channel. Herein, the control information is MISS information, ACK information or NACK information. The transmitter performs aforementioned steps 1402, 1404, 1406 and 1408 by the control information.

As described above, the this embodiment of the present invention discloses a method by which a Node B transmits a processing result for an uplink packet channel by means of a DPCH pilot field of a downlink, and a UE extracts the DPCH pilot field, determines the processing result for the uplink packet channel, and operates an automatic retransmission request (ARQ) or a hybrid automatic retransmission request (HARQ) of the uplink packet channel. Accordingly, in this embodiment of the present invention, a separate physical channel is not used in order to transmit a channel decoding result (control information) of the uplink packet channel, so that additional power and an orthogonal variable spreading factors (OVSF) code are not consumed. Further, in this embodiment of the present invention, the processing result (control information) for the uplink packet channel is transmitted without the loss of data of an existing physical channel, so that the performance of the physical channel is prevented from deteriorating. In addition, when one physical channel is added to a downlink for transmission of other information, the amount of information to be transmitted through the downlink can be reduced.

In the aforementioned embodiments of the present invention, a construction for transmitting control information (ACK/NACK or MISS/ACK/NACK) by means of one slot is described. However, when a higher reliability is required, it should be apparent to those who are skilled in the art that a pilot signal can be transmitted/received through plural slots. In addition, when the number of bits of pilot patterns transmitted through one slot is larger than or equal o, that is, $N_{pilot} \geq 2$, four orthogonal patterns are defined. Accordingly, four control information can be transmitted. Further, when the number of bits of pilot patterns is N, $2^N$ orthogonal patterns are defined. Accordingly, it should be apparent to those who are skilled in the art that $2^N$ control information can be transmitted.

Although certain embodiments of the present invention have been described for illustrative purposes, those skilled in the art will appreciate that various modifications, additions and substitutions are possible, without departing from the scope and spirit of the invention as disclosed in the accompanying claims, including the full scope of equivalents thereof.

**Claims**

1. A method for transmitting information regarding whether data are received in a mobile communication system, the method comprising the steps of:

   generating a pilot signal having different predetermined pilot patterns according to whether the data are received and the data contain an error; and
   inserting the generated pilot signal into a pilot field of a physical channel frame as control information and transmitting the physical channel frame.

2. The method as claimed in claim 1, wherein a first pilot pattern generated when the data have not been received is equal to a pilot pattern when the control information is not transmitted, and pilot patterns generated according to whether the data contain the error are perpendicular to the first pilot pattern and perpendicular to each other.

3. The method as claimed in claim 1, wherein the pilot signal comprises one of a MIS, ACK and NACK signal.

4. The method as claimed in claim 3, wherein the ACK signal is indicative of reception of data that are substantially error free, the NACK signal is indicative of reception of data containing an error, and the MIS signal is indicative of a lack of reception of data.

5. A method for receiving control information regarding reception of transmitted data in a mobile communication system, the method comprising the steps of:

   detecting a pilot signal that was inserted into a pilot field of a physical channel frame as control information for the transmitted data; and
   determining whether the data are received and the data contain an error based on a pilot pattern of the detected pilot signal, and determining whether the data are retransmitted based on a result of the determination.

6. The method as claimed in claim 5, wherein the pilot signal includes pilot patterns perpendicular to each other according to whether the data are received and the data contain the error,
   a first pilot pattern indicating that the data have not been received is equal to a pilot pattern when the control information is not transmitted, and pilot patterns indicating whether the data contain the error are perpendicular to the first pilot pattern and perpendicular to each other.

7. The method as claimed in claim 5, wherein the pilot signal comprises one of a MIS, ACK and NACK signal.

8. The method as claimed in claim 7, wherein the ACK signal is indicative of reception of data that are substantially error free, the NACK signal is indicative of reception of data containing an error, and the MIS signal is indicative of a lack of reception of data.

9. An apparatus for transmitting control information regarding reception of data in a mobile communication system, the apparatus comprising:

   a pilot pattern generator for generating a pilot signal having different predetermined pilot patterns according to whether the data are received and the data contain an error;
   a pilot pattern inserting unit for inserting the selected pilot signal into a pilot field of a physical channel frame as control information; and
   a modulator for modulating and transmitting the physical channel frame.

10. The apparatus as claimed in claim 9, wherein a first pilot pattern generated when the data have not been received is equal to a pilot pattern when the control information is not transmitted, and pilot patterns generated according to whether the data contain the error are perpendicular to the first pilot pattern and perpendicular to each other.

11. The apparatus as claimed in claim 9, further comprising:

   a dedicated physical data channel (DPDCH) generator for generating DPDCH data based on received data channel data.

**12.** The apparatus as claimed in claim 9, further comprising:

a dedicated physical control channel (DPCCH) generator for generating DPCCH data based on a received transmit power control (TPC) bit and a transport format combination indicator (TFCI) bit.

**13.** The apparatus as claimed in claim 9, further comprising:

a multiplexer for multiplexing dedicated physical data channel (DPDCH) data and dedicated physical control channel (DPCCH) data.

**14.** The apparatus as claimed in claim 9, wherein the pilot signal comprises one of a MIS, ACK and NACK signal.

**15.** The apparatus as claimed in claim 14, wherein the ACK signal is indicative of reception of data that are substantially error free, the NACK signal is indicative of reception of data containing an error, and the MIS signal is indicative of a lack of reception of data.

**16.** An apparatus for receiving control information regarding reception of transmitted data in a mobile communication system, the apparatus comprising:

a channel estimator for detecting a pilot signal that was inserted into a pilot field of a physical channel frame as control information for the transmitted data; and
a packet channel adjuster for determining whether the data are received and the data contain an error by a pilot pattern of the detected pilot signal, and determining whether the data are retransmitted by a result of the checking.

**17.** The method as claimed in claim 16, wherein the pilot signal includes one of pilot patterns perpendicular to each other according to whether the data are received and the data contain the error,
a first pilot pattern representing that the data have not been received is equal to a pilot pattern when the control information is not transmitted, and pilot patterns representing whether the data contain the error are perpendicular to the first pilot pattern and perpendicular to each other.

**18.** The apparatus as claimed in claim 16, wherein the pilot signal comprises one of a MIS, ACK and NACK signal.

**19.** The apparatus as claimed in claim 18, wherein the ACK signal is indicative of reception of data that are substantially error free, the NACK signal is indicative of reception of data containing an error, and the MIS signal is indicative of a lack of reception of data.

EXISTING PHYSICAL CHANNEL

ACK/NACK INFORMATION OF
UPLINK PACKETS

# FIG.1

EXISTING PHYSICAL CHANNEL

OTHER INFORMATION SIGNALS

ACK/NACK INFORMATION OF
UPLINK PACKETS

# FIG.2

FIG.3

EP 1 564 923 A1

400

RECEIVED
SIGNAL → CHANNEL
COMPENSATOR → DEMODULATOR → DATA

402

404

ACK/NACK
EXTRACTOR → PACKET
CHANNEL
ADJUSTER → RETRANSMISSION
IS PERFORMED
OR NOT

406

FIG.4

404

502

RECEPTION
JUDGMENT UNIT

OUTPUT OF
CHANNEL
COMPENSATOR → DPCH PILOT
EXTRACTOR → DPCH PILOT FIELD
PATTERN DETECTOR → ACK/NACK
JUDGMENT UNIT → ACK/NACK

500

504

506

FIG.5

START

600

ACKNOWLEDGEMENT
TIMING?

NO

604 → GENERATE ACK/NACK SIGNAL
HAVING A VALUE OF +1

YES

PROCESSING RESULT OF
UPLINK PACKET CHANNEL
(ACK/NACK)

CONVERT ACK/NACK INFORMATION
TO A BINARY SIGNAL(+1/-1)    602

MULTIPLY ACK/NACK SIGNAL BY PILOT
SIGNAL AND INSERT MULTIPLICATION
RESULT INTO DPCH FRAME    606

DEMODULATION AND
CHANNEL DECODING FOR
UPLINK PACKET CHANNEL    620

DOWNLINK DPCH MODULATION
AND TRANSMISSION    608

CHANNEL

TRANSMIT UPLINK
PACKET CHANNEL    618

RECEIVE/DESPREAD
DOWNLINK DPCH SIGNAL    610

EXTRACT ACK/NACK
SIGNAL    616

CHANNEL COMPENSATION    612

DEMODULATION AND
CHANNEL DECODING    614

END

FIG.6

FIG.7

FIG.8

EP 1 564 923 A1

900

```
┌──────────────────┐
│ DPCH RECEPTION   │
│ JUDGMENT UNIT    │
└──────────────────┘
```

RECEIVED
SIGNAL

902

```
┌──────────────────┐
│ DPCH PILOT       │
│ EXTRACTOR        │
└──────────────────┘
```

904

$p_{i0}^{\star}(n)$

908

```
┌──────────────┐
│ ACCUMULATOR1 │
└──────────────┘
```

906

$p_{i1}^{\star}(n)$

910

```
┌──────────────┐
│ ACCUMULATOR2 │
└──────────────┘
```

912

```
┌──────────────┐
│              │
│ COMPARATOR   │
│              │
└──────────────┘
```

804

CHANNEL
ESTIMATION VALUE

COMPARISON
RESULT

914

```
┌──────────────────┐
│ ACK/NACK         │
│ JUDGMENT UNIT    │
└──────────────────┘
```

ACK/NACK

FIG.9

START

1000

ACKNOWLEDGEMENT
TIMING?

NO

YES

1004 — SELECT $p_{i0}(n)$

PROCESSING RESULT OF
UPLINK PACKET CHANNEL
(ACK/NACK)

SELECT $\{p_{i0}(n), p_{i1}(n)\}$
ACCORDING TO ACK/NACK — 1002

INSERT SELECTED PILOT
PATTERN INTO DPCH FRAME — 1006

DEMODULATION AND
CHANNEL DECODING FOR — 1022
UPLINK PACKET CHANNEL

DOWNLINK DPCH MODULATION
AND TRANSMISSION — 1008

CHANNEL

TRANSMIT UPLINK
PACKET CHANNEL — 1020

RECEIVE/DESPREAD
DOWNLINK DPCH SIGNAL — 1010

EXTRACT ACK/NACK
SIGNAL — 1018

CHANNEL ESTIMATION — 1012

CHANNEL COMPENSATION — 1014

DEMODULATION AND
CHANNEL DECODING — 1016

END

FIG.10

FIG.11

RECEIVED
SIGNAL

DATA SYMBOL

1200

CHANNEL
COMPENSATOR

1202

MODULATOR

DPCH
DATA

CHANNEL
ESTIMATION VALUE

1204~ CHANNEL
ESTIMATOR

MISS/ACK/NACK

1206

PACKET
CHANNEL
ADJUSTER

RETRANSMISSION
IS PERFORMED
OR NOT

FIG.12

EP 1 564 923 A1

**1300**

DPCH RECEPTION JUDGMENT UNIT

**1204**

RECEIVED SIGNAL → DPCH PILOT EXTRACTOR

**1302**

**1304** ⊗ $p_{i0}^*(n)$

**1310** ACCUMULATOR1

**1316** COMPARATOR

CHANNEL ESTIMATION VALUE

**1306** ⊗ $p_{i1}^*(n)$

**1312** ACCUMULATOR2

COMPARISON RESULT

**1318** MISS/ACK/NACK JUDGMENT UNIT → MISS/ACK /NACK

**1308** ⊗ $p_{i2}^*(n)$

**1314** ACCUMULATOR3

## FIG.13

START

1410

ACKNOWLEDGEMENT TIMING?

NO

YES

1404 — SELECT $p_{i0}(n)$

PROCESSING RESULT OF
UPLINK PACKET CHANNEL
(MISS/ACK/NACK)

SELECT $\{p_{i0}(n), p_{i1}(n), p_{i2}(n)\}$
ACCORDING TO MISS/ACK/NACK — 1402

INSERT SELECTED PILOT
PATTERN INTO DPCH FRAME — 1406

DEMODULATION AND
CHANNEL DECODING
FOR UPLINK
PACKET CHANNEL — 1422

DOWNLINK DPCH MODULATION
AND TRANSMISSION — 1408

CHANNEL

TRANSMIT UPLINK
PACKET CHANNEL — 1420

RECEIVE/DESPREAD
DOWNLINK DPCH SIGNAL — 1410

EXTRACT MISS
/ACK/NACK SIGNAL — 1418

CHANNEL ESTIMATION — 1412

CHANNEL COMPENSATION — 1414

DEMODULATION AND
CHANNEL DECODING — 1416

END

FIG.14

**European Patent Office**

**EUROPEAN SEARCH REPORT**

Application Number

EP 05 00 2948

## DOCUMENTS CONSIDERED TO BE RELEVANT

| Category | Citation of document with indication, where appropriate, of relevant passages | Relevant to claim | CLASSIFICATION OF THE APPLICATION (Int.Cl.7) |
|---|---|---|---|
| X | US 6 285 663 B1 (ESMAILZADEH RIAZ) 4 September 2001 (2001-09-04) * abstract * * column 1, line 49 - column 2, line 44 * * column 3, line 22 - column 4, line 13 * * column 4, lines 59-64 * * column 5, lines 52-63 * * column 6, line 58 - column 7, line 1 * * claims * ----- | 1-19 | H04L1/16 |
| X | EP 0 991 204 A (NEC CORPORATION) 5 April 2000 (2000-04-05) * abstract * * page 3, lines 9-18 * * page 3, lines 35-37 * * page 3, line 44 - page 4, line 5 * * page 4, lines 32-54 * * page 5, lines 9-28 * * page 6, lines 21-23 * * claims * ----- | 1,5,9,16 | |
| A | EP 1 349 292 A (SAMSUNG ELECTRONICS CO., LTD) 1 October 2003 (2003-10-01) * the whole document * ----- | 1-19 | TECHNICAL FIELDS SEARCHED (Int.Cl.7) H04L H04Q |
| A | US 2002/002050 A1 (RINNE MIKKO ET AL) 3 January 2002 (2002-01-03) * the whole document * ----- | 1-19 | |

The present search report has been drawn up for all claims

| Place of search | Date of completion of the search | Examiner |
|---|---|---|
| The Hague | 8 April 2005 | Dejonghe, O |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

**EP 1 564 923 A1**

## ANNEX TO THE EUROPEAN SEARCH REPORT
## ON EUROPEAN PATENT APPLICATION NO.

EP 05 00 2948

This annex lists the patent family members relating to the patent documents cited in the above-mentioned European search report.
The members are as contained in the European Patent Office EDP file on
The European Patent Office is in no way liable for these particulars which are merely given for the purpose of information.

08-04-2005

| Patent document cited in search report | | Publication date | Patent family member(s) | | Publication date |
|---|---|---|---|---|---|
| US 6285663 | B1 | 04-09-2001 | AU | 763880 B2 | 31-07-2003 |
| | | | AU | 4810099 A | 30-12-1999 |
| | | | BR | 9910932 A | 28-02-2001 |
| | | | CA | 2333098 A1 | 16-12-1999 |
| | | | CN | 1304599 A | 18-07-2001 |
| | | | EP | 1084539 A1 | 21-03-2001 |
| | | | JP | 2002518877 T | 25-06-2002 |
| | | | RU | 2221343 C2 | 10-01-2004 |
| | | | WO | 9965171 A1 | 16-12-1999 |
| | | | TW | 428384 B | 01-04-2001 |
| | | | ZA | 200006638 A | 15-11-2001 |
| EP 0991204 | A | 05-04-2000 | JP | 3397237 B2 | 14-04-2003 |
| | | | JP | 2000115072 A | 21-04-2000 |
| | | | CN | 1254225 A | 24-05-2000 |
| | | | EP | 0991204 A2 | 05-04-2000 |
| | | | US | 2003123407 A1 | 03-07-2003 |
| EP 1349292 | A | 01-10-2003 | KR | 2003077732 A | 04-10-2003 |
| | | | CN | 1471254 A | 28-01-2004 |
| | | | EP | 1349292 A2 | 01-10-2003 |
| | | | JP | 2003339073 A | 28-11-2003 |
| | | | US | 2003185242 A1 | 02-10-2003 |
| US 2002002050 | A1 | 03-01-2002 | FI | 982781 A | 23-06-2000 |
| | | | AU | 3046500 A | 12-07-2000 |
| | | | BR | 9916511 A | 04-09-2001 |
| | | | CA | 2356117 A1 | 29-06-2000 |
| | | | CN | 1333959 A | 30-01-2002 |
| | | | EP | 1142155 A2 | 10-10-2001 |
| | | | WO | 0038350 A2 | 29-06-2000 |
| | | | JP | 2002533986 T | 08-10-2002 |

EPO FORM P0459

For more details about this annex : see Official Journal of the European Patent Office, No. 12/82

29